Europäisches Patentamt

**European Patent Office** (11) Veröffentlichungsnummer: **0 033 755**
**B1**

Office européen des brevets

(12) **EUROPÄISCHE PATENTSCHRIFT**

(45) Veröffentlichungstag der Patentschrift:
**08.08.84**

(21) Anmeldenummer: **80102839.0**

(22) Anmeldetag: **22.05.80**

(51) Int. Cl.³: **B 65 G 47/32,** B 65 G 47/90,
B 65 G 57/26, F 27 D 3/00

(54) **Einrichtung zum Bilden einer Setzlage aus Ziegelformlingen.**

(30) Priorität: **01.02.80 DE 3003644**

(43) Veröffentlichungstag der Anmeldung:
**19.08.81 Patentblatt 81/33**

(45) Bekanntmachung des Hinweises auf die Patenterteilung:
**08.08.84 Patentblatt 84/32**

(84) Benannte Vertragsstaaten:
**AT BE CH FR GB IT LI NL SE**

(56) Entgegenhaltungen:
**DD - A - 51 233**
**DE - A - 2 520 906**
**DE - A - 2 730 428**
**DE - A - 2 758 648**
**DE - A - 2 801 547**
**DE - A - 2 831 485**
**DE - B - 2 155 535**
**DE - B - 2 612 839**
**DE - C - 2 312 946**
**US - A - 1 627 656**

(73) Patentinhaber: **C. KELLER GMBH u. CO. KG,**
**Carl-Keller-Strasse 2-10, D-4530 Ibbenbüren 2 (DE)**

(72) Erfinder: **Kamphues, Hermann, Prinzhügel 19 b,**
**D-4530 Ibbenbüren 2 (DE)**

BUNDESDRUCKEREI BERLIN

## Beschreibung

Die Erfindung betrifft eine Einrichtung zum Bilden einer Setzlage aus Ziegelformlingen, mit einer Ziegelformlinge in Längsreihen — d. h. mit den größten Außenflächen dicht aneinanderliegenden Ziegelformlingen — heranführenden Förderbahn, von der die Längsreihen in den Bereich einer Vorrichtung zum Vereinzeln der dicht aneinanderliegenden Ziegelformlinge unter Einhaltung von vorbestimmten Abständen befördert werden und mit einer im Anschluß daran angeordneten Bereitstellungsbahn.

Bei einer bekannten Einrichtung (DE-A1-2 312 946) werden die in einer durch Längs- und Querreihen gebildeten Setzlage zusammengeführten Ziegelformlinge durch Tragleisten von Rollen abgehoben und in Richtung der Rollen-Längsachsen befördert, bis die in Bewegungsrichtung vorderste Querreihe auf einen Widerstand trifft, durch den die hinterste angehobene Querreihe wieder von den Tragleisten auf die Setzunterlage abgeschoben wird. Die übrigen angehobenen Querreihen werden bei aufgehobenem Widerstand bis zum Erreichen eines gewünschten Querreihen-Abstandes von den Tragleisten weiterbewegt, so daß durch die erneute Wirkung des entsprechend eingestellten Widerstandes eine weitere Querreihe wieder von den Tragleisten auf der Setzunterlage abgeschoben wird, wobei sich nach einem solchen absatzweisen Wiederabschieben aller Querreihen von den Tragleisten auf der Setzunterlage die Setzlage mit den vorbestimmten Abständen zwischen den einzelnen Querreihen ergibt. Die Tragleisten legen dabei eine Strecke zurück, die der gesamten Setzlage entspricht.

Bei einer anderen bekannten Einrichtung (DE-A1-2 758 648) besteht die Vorrichtung zum Vereinzeln der dicht aneinanderliegenden Ziegelformlinge zwischen angetriebenen Rollen befindlichen schmalen, horizontal angeordneten, geteilten Bändern, die in die Abstände zwischen den Rollen eingreifen, auf- und abbeweglich und von- und gegeneinander beweglich ausgebildet sind. Beim Vereinzeln heben die geteilten Bänder eine Längsreihe Ziegelformlinge von den Rollen ab, und die Bänder bewegen sich mit gleicher Geschwindigkeit voneinander weg. Die Bänder sind dabei so angetrieben, daß sie die Hälften der Längsreihe entgegen der Bewegungsrichtung der Bänder fördern, wobei sich die Bänder unter den Ziegelformlingen abwickeln, so daß diese über die Bänderenden in abkippender Weise in Abständen liegend auf die Rollen gelangen. Die Abstände zwischen den Ziegelformlingen werden in der Weise gezogen, indem der Antrieb der Bänder nach jeder Übergabe eines Ziegelformlings abgeschaltet wird, so daß die auf den Bändern verbliebenden Ziegelformlingen von den bereits auf den Rollen befindlichen fortbewegt werden. Die geteilten Bänder legen dabei eine Strecke zurück, die der halben Setzlage entspricht. Nach Auseinanderziehen der Formlinge senken die Bänder ab und bewegen sich wieder in die Ausgangsstellung zurück.

Bei einer anderen Ausführungsform sind die geteilten Bänder gegeneinandergeneigt angeordnet. Beim Vereinzeln heben die Bänder die Formlinge in der Längsreihe von außen beginnend von den Rollen ab, wobei die Bänder so angetrieben sind, daß die Ziegelformlinge von den anderen weg nach außen bewegt werden. Bei diesem Vorgang müssen die Bänder angehoben werden, wobei die Hubbewegung so steuerbar ist, daß sie unterbrochen werden kann, wodurch bestimmte Abstände zwischen den verzogenen Ziegelformlingen der Längsreihe entstehen.

Nachteilig bei diesen bekannten Einrichtungen ist, daß die Ziegelformlinge während der Setzlagenbildung von einer höher gelegenen Ebene (Tragleisten oder Bänder) in kippender Weise auf eine niedriger gelegene Ebene (Rollen) gelangen. Dieses Abkippen bewirkt eine ungenaue Übergabe der Formlinge, da hierbei die Formlinge infolge einer mehr- oder mindergroßen Haftung an der höher gelegenen Ebene verzogen werden, so daß die Abstände zwischen den einzelnen Querreihen bzw. Ziegelformlingen ungenau werden. Diese Gefahr tritt auch besonders bei den geneigt angeordneten Bändern auf, da die Ziegelformlinge infolge der Nachgiebigkeit und Rutschen der Bänder bei der Abnahme von den Rollen verzogen werden. Aus demselben Grund können auch die einzelnen Abstände nicht eingehalten werden, da die Hubbewegung nicht genau bestimmt werden kann und es deshalb vorkommt, daß nicht nur ein Ziegelformling mitbewegt wird. Dies tritt besonders dann auf, wenn Setzlagen bzw. Längsreihen aus Formlingen mit geringer Schnittstärke erstellt werden. Es kann dabei vorkommen, daß Formlinge während des Transportes durch den Setzgreifer aus diesen herausfallen, da sie nicht ausreichend durch die Greifer erfaßt werden.

Bei den bekannten Einrichtungen muß die die Formlinge aufnehmende und während der Lückenbildung höher gelegene Ebene (Tragleisten oder Bänder) eine Strecke zurücklegen, die der gesamten bzw. halben Setzlage entspricht. Erst dann kann die Tragleisten- bzw. Bänder-Ebene unter die Rollen-Ebene abgesenkt und in die Ausgangsposition zurückgeführt werden, um die Bildung einer neuen Setzlage bzw. einer auseinandergezogenen Längsreihe zu beginnen. Dieser Bewegungsablauf ist jedoch sehr zeitraubend und wirkt sich dementsprechend negativ auf die Leistung aus.

Außerdem besteht bei den bekannten Einrichtungen der Nachteil, daß bei der Übergabe bzw. Abnahme der Ziegelformlinge auf die bzw. von den Rollen eine Kante des übergebenen bzw. abnehmenden Ziegelformlings am nachfolgenden Ziegelformling entlangscheuert, wodurch Abplatzungen entstehen können.

Bei den geneigt angeordneten Bändern muß die Geschwindigkeit der Bänder in Abhängigkeit von der Hubbewegung der Bänder gewählt werden, was dazu führt, daß die Bewegung der Bänder langsam erfolgen muß, da sonst keine Abstände zwischen den Ziegelformlingen entstehen würden.

Demzufolge verstreicht für das Vereinzeln der Ziegelformlinge eine entsprechend lange Zeitspanne, die sich negativ bei der Bildung einer Setzlage auswirkt, zumal die Hubbewegung der Bänder beim Ziehen der Abstände unterbrochen werden muß.

Bei einer bekannten Steinsetzanlage (DE-A1-2 520 906) werden von einer Presse jeweils mit einem Pressenhub vier Steine einer bestimmten Größe geformt und durch eine Abschubeinrichtung aus der Presse auf einen Lieferförderer geschoben. Die vier Steine liegen dabei mit der größten Außenseite flach und in Abständen voneinander auf dem Lieferförderer.

Nachdem die Steine mit Hilfe des Lieferförderers in Aufnahmeposition in den Bereich unterhalb eines auf einer Fahrbrücke angeordneten Wendegreifers gefahren worden sind, senkt eine am Wendegreifer angeordnete Hubeinrichtung bei geöffneten Greiforganen ab, die Greiforgane schließen und die Hubeinrichtung hebt alle vier Steine gleichzeitig an. Unmittelbar nach dem Abheben vom Lieferförderer wird bereits der Wendegreifer in Richtung auf ein nachgeschaltetes Vorlageband in Bewegung gesetzt. Während des Verfahrens werden gleichzeitig einmal die Hubvorrichtung zusammen mit den Greiforganen um die vertikale Achse um 90° verschwenkt, während gleichzeitig jeder Stein ebenfalls um 90° von den Greiforganen in seine Hochkantlage verschwenkt wird. Sobald die Steine von den Greiforganen hochkant gehalten werden, wobei die Abstände der einzelnen Greiforgane zueinander noch den weiten Abständen entsprechen, wie sie zur Aufnahme der weit auseinanderliegenden Steine vom Lieferförderer erforderlich sind, werden nunmehr die Verschiebeantriebe eingeschaltet, so daß die hochkantstehenden Steine auf den gewünschten engen Abstand zueinander zusammengefahren werden. Zwischenzeitlich ist der Wendegreifer über dem Aufgabeende des Vorlagebandes angelangt, so daß nunmehr die von den Greiforganen gehaltenen Steine auf das Vorlageband abgesenkt und die Greiforgane gelöst werden können. Da die Greiforgane einzeln mit Verschiebeantrieben versehen sind, werden die Steine individuell bewegt. Somit kommt es hier nicht zum Bilden einer Setzlage, sondern es wird lediglich eine einzelne lange Reihe aus in Abständen liegenden Steinen gebildet.

Hier will die Erfindung Abhilfe schaffen. Die Erfindung, wie sie in den Ansprüchen gekennzeichnet ist, löst die Aufgabe, eine Einrichtung zum Bilden einer Setzlage aus Ziegelformlingen zu schaffen, die das Vereinzeln von Ziegelformlingen zum Bilden einer Setzlage ohne größere Beanspruchung der Ziegelformlinge, insbesondere ohne Scheuerwirkung, mit minimalem Zeitaufwand gestattet und zugleich ein genaues Vereinzeln der Ziegelformlinge bewirkt.

Die durch die Erfindung erreichten Vorteile sind darin zu sehen, daß die Ziegelformlinge von den Einzelgreifern während der Setzlagenbildung senkrecht ohne Kippbewegung und Scheuerwirkung an den Kanten auf die Rollen abgesetzt werden, so daß die zwischen den Ziegelformlingen zu ziehenden Abstände genau eingehalten werden.

Die erfindungsgemäße Einrichtung zeichnet sich weiterhin durch eine hohe Leistung aus, da der Greiferwagen bzw. die Einzelgreifer während der Lückenbildung nur eine solche Strecke bewegt werden, die der Summe der zwischen den Ziegelformlingen zu ziehenden Abstände entspricht. Sind zum Beispiel elf Abstände von je zehn mm Breite zu ziehen, so wird der Greiferwagen um 110 mm verfahren. Bei einem geteilten Greiferwagen legt ein jeder Teilgreiferwagen die Strecke von 55 mm zurück. Der Greiferwagen wird sofort wieder in Ausgangsposition gefahren, sobald alls Einzelgreifer von Ziegelformlingen entlastet sind.

Durch den geringeren Fahrweg des Greiferwagens während der Lückenbildung zwischen den Formlingen ergibt sich eine geringere Baulänge, die sich positiv bei den Investitionskosten bemerkbar macht.

Mit der erfindungsgemäßen Einrichtung können alle Ziegelformate auseinandergezogen werden, da die Breite der Einzelgreifer auf die geringste Formlingsstärke ausgerichtet ist. Bei der geringsten Formlingsstärke ergreift ein Einzelgreiferpaar einen Ziegelformling, während größere Ziegelformlinge von mehreren Einzelgreifern ergriffen werden.

Im folgenden wird die Erfindung anhand von lediglich einen Ausführungsweg darstellenden Zeichnungen näher erläutert. Es zeigt

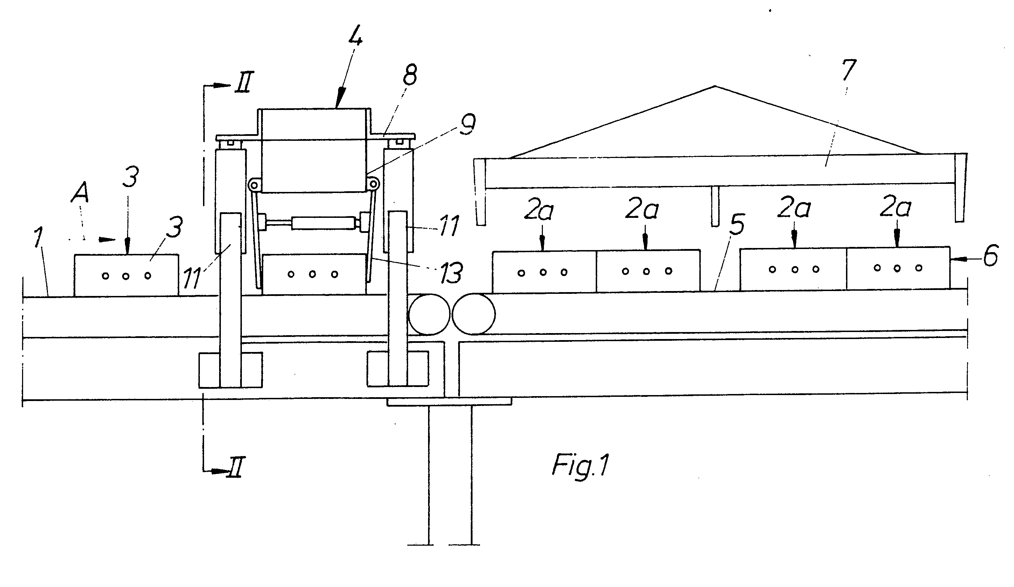

Fig. 1 eine Seitenansicht der Einrichtung,

Fig. 2 eine Ansicht nach der Linie II-II in Fig. 1,

Fig. 3 eine Ansicht, ähnlich wie Fig. 1, jedoch in einer anderen Betriebsstellung,

Fig. 4 eine Ansicht, ähnlich wie Fig. 2, jedoch mit einem zweigeteilten Greiferwagen,

Fig. 5 eine Ansicht, ähnlich wie Fig. 4, jedoch in einer anderen Betriebsstellung.

Durch eine Förderbahn 1 werden in Längsreihen 2 dicht aneinanderliegende Ziegelformlinge 3 in den Bereich einer Vereinzelungs-Vorrichtung 4 befördert, die die Förderbahn 1 quer zur Förderrichtung A überspannt.

Die Vereinzelungs-Vorrichtung 4 zieht zwischen den Ziegelformlingen 3 einer Längsreihe 2 die erforderlichen Abstände bzw. Lücken. Nachdem dies geschehen ist, wird die nunmehr mit Abständen versehene Längsreihe 2a auf eine anschließend angeordnete Bereitstellungsbahn 5 befördert, wo durch Zusammensetzen mehrerer Längsreihen 2a eine Setzlage 6 entsteht, die dann vom Setzgreifer 7 von der Bereitstellungsbahn 5 abgehoben wird.

Die Vereinzelungs-Vorrichtung 4 besteht aus einer Fahrbrücke 8 und einem an der Fahrbrücke 8 angeordneten Greiferwagen 9. Die Fahrbrücke 8 ist durch Kolben-Zylinder-Einheiten 10 auf- und abbewegbar und wird dabei an Führungen 11 geführt. Der Greiferwagen 9 ist durch einen Kettenzug 12 entsprechend der zu ziehenden Abstände hin- und herbewegbar ausgebildet. Am Greiferwagen 9 sind Einzelgreifer 13 angeordnet, die die Ziegelformlinge 3 an den Stirnseiten erfassen. Der Greiferwagen 9 kann auch aus zwei Teilgreiferwagen 9a und 9b bestehen, die während des Vereinzelungsvorganges voneinander weg und nach dem Vereinzelungsvorgang aufeinander zubewegt werden.

Sobald nun eine Längsreihe 2 in den Bereich der Vereinzelungs-Vorrichtung 4 gelangt ist, werden die Formlinge 3 in der Längsreihe 2 von den Einzelgreifern 13 an den Stirnseiten ergriffen. Die Fahrbrücke 8 und damit der Greiferwagen 9 und die Formlinge 3 werden dann mittels der Kolben-Zylinder-Einheiten 10 nur so weit angehoben, daß die Formlinge 3 die Förderbahn 1 nicht mehr berühren. Dann erfolgt das Vereinzeln der Formlinge 3, welches folgendermaßen vor sich geht:

Durch Betätigung des Einzelgreifers 13a wird der Formling 3a wieder auf die Förderbahn 1 abgesetzt. Danach wird der Greiferwagen 9 in Richtung des Pfeiles B bewegt, wodurch ein Abstand zwischen dem auf dem Förderband 1 befindlichen Formling 3a und dem noch im angehobenen Zustand befindlichen Formling 3b gezogen wird. Ist der gewünschte Abstand erreicht, wird der Einzelgreifer 13b betätigt, wodurch der Formling 3b auf die Förderbahn 1 abgesetzt wird. Der Greiferwagen 9 bewegt sich weiter in Richtung des Pfeiles B und zieht den zwischen dem Formling 3b und dem Formling 3c gewünschten Abstand. Ist dieser erreicht, wird der Einzelgreifer 13c betätigt und der Formling 3c wird auf die Förderbahn 1 abgesetzt. In der geschilderten Weise werden zwischen allen Formlingen 3 die gewünschten Abstände bzw. Lücken gezogen, wobei nach Erreichen der Abstände jedesmal der betreffende Einzelgreifer 13 betätigt wird.

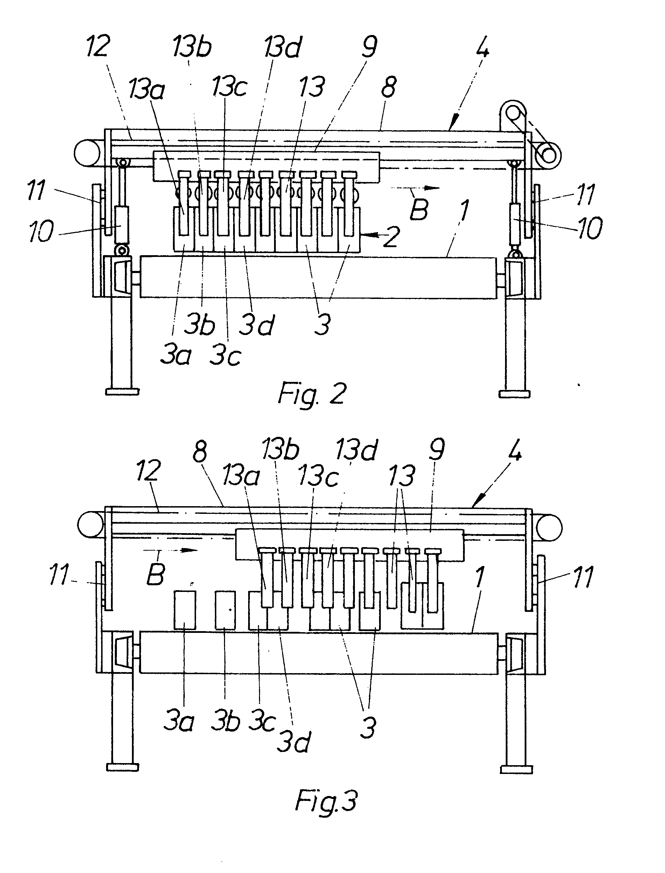

Es ist auch möglich, daß nach Ziehen einer Lücke mehrere Einzelgreifer 13 zugleich betätigt werden können, wenn z. B. die Formlinge 3c und 3d ohne Abstand auf die Förderbahn 1 abgesetzt werden sollen (Fig. 3). Die Einzelgreifer 13c und 13d werden dann gleichzeitig betätigt. Je nachdem in welchen Abständen die einzelnen Formlinge 3 zueinander stehen sollen, kann die Betätigung der Einzelgreifer 13 vorgenommen werden. Der Greiferwagen 9 kann während des Vereinzelungs-Vorganges kontinuierlich in Richtung des Pfeiles B bewegt werden, er kann jedoch auch bei dem Absetzen der Formlinge 3 auf die Förderbahn 1 kurzzeitig angehalten werden. Ist der Vereinzelungs-Vorgang beendet und alle Einzelgreifer 13 betätigt worden, wird die Fahrbrücke 8 so weit angehoben, daß die Einzelgreifer 13 das Abtransportieren der auseinandergezogenen Längsreihen 2a nicht behindern. Der Greiferwagen 9 fährt dann sofort in Ausgangsstellung entgegen der Richtung des Pfeiles B zurück und steht dort für einen neuen Vereinzelungs-Vorgang bereit.

Die Breite der Einzelgreifer 13 sind der Breite des kleinsten Ziegelformats angepaßt, so daß immer nur ein Einzelgreifer 13 ein Ziegelformling 3 ergreift. Werden breitere Ziegelformlinge behandelt, so ergreifen mehrere Einzelgreifer 13 diesen Ziegelformling. Die Einzelgreifer 13 werden je nach Anzahl der den Formling ergriffenen Einzelgreifer 13 betätigt.

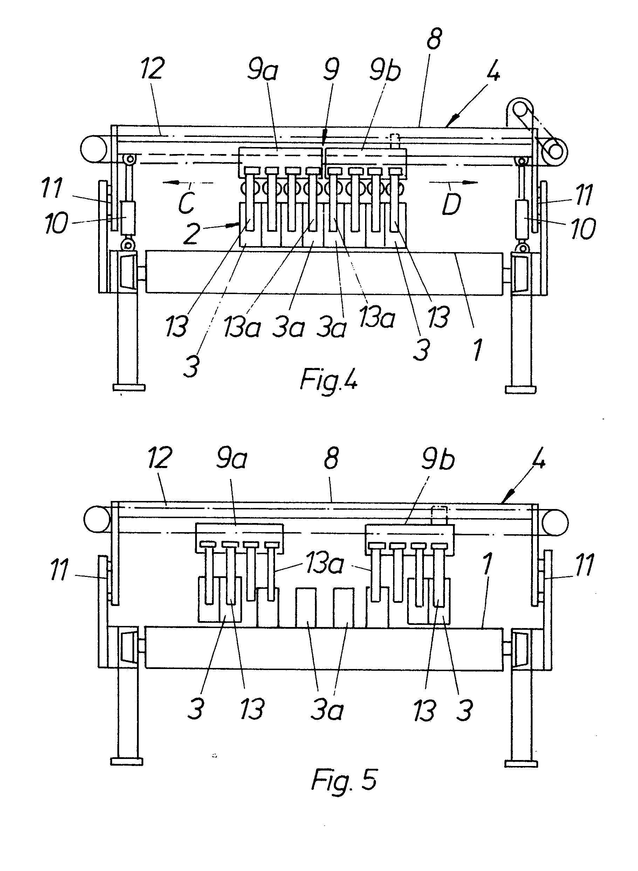

Der Greiferwagen 9 kann auch in zwei Teilgreiferwagen 9a und 9b unterteilt sein (Fig. 4 und Fig. 5). Das Vereinzeln der Formlinge 3 erfolgt in der Längsreihe 2 in der obengeschilderten Weise durch Betätigung der entsprechenden Einzelgreifer 13 nach Ziehen einer Lücke, wobei der Teilgreiferwagen 9a mit der einen Hälfte der Längsreihe 2 in Richtung des Pfeiles C und der Teilgreiferwagen 9b mit der anderen Hälfte der Längsreihe 2 in Richtung des Pfeiles D bewegt wird. Nach Ende des Vereinzelungsvorganges fahren die Teilgreiferwagen 9a und 9b nach Anheben durch die Fahrbrücke 8 wieder entgegen der angegebenen Pfeilrichtungen in die Ausgangsstellung zurück.

Während des Vereinzelungs-Vorganges legt der Greiferwagen 9 eine Strecke zurück, die der Summe der insgesamt zu ziehenden Lücke entspricht. Jeder der Teilgreiferwagen 9a und 9b legt beim Vereinzelungs-Vorgang eine Strecke zurück, die der halben Summe der insgesamt zu ziehenden Lücken entspricht.

## Patentansprüche

1. Einrichtung zum Bilden einer Setzlage (6) aus Ziegelformlingen, mit einer Ziegelformlinge in Längsreihen (2) — d. h. mit den größten Außenflächen dicht aneinanderliegenden Ziegelformlingen — heranführenden Förderbahn (1), von der die Längsreihen (2) in den Bereich einer Vorrichtung zum Vereinzeln (4) der dicht aneinanderliegenden Ziegelformlinge unter Einhaltung von vorbestimmten Abständen befördert werden und mit einer im Anschluß daran angeordneten Bereitstellungsbahn (5), wobei

— die Vorrichtung zum Vereinzeln (4) der quer zur Förderrichtung der Förderbahn (1) und in Längsreihe (2) dicht aneinanderliegenden Ziegelformlinge (3) eine die Förderbahn (1) quer überspannende Fahrbrücke (8) aufweist,

— die Fahrbrücke (8) auf- und abbeweglich ausgebildet ist,

— an der Fahrbrücke (8) ein quer zur Förderrichtung der Förderbahn (1) hin- und herbeweglicher Greiferwagen (9) angeordnet ist,

— am Greiferwagen (9) Einzelgreifer (13) unverschieblich nebeneinander angeordnet sind, die die Ziegelformlinge (3) nach Absenken der Fahrbrücke (8) an den Stirnseiten ergreifen, und

— die Ziegelformlinge (3) nach Heben der Fahrbrücke (8) durch Verschieben des Greiferwagens (9) dadurch vereinzelt werden, daß die den einzelnen Formlingen (3) zugeordneten Einzelgreifer (13) nacheinander gelöst werden, sobald der betreffende Ziegelformling seinen vorbestimmten Abstand erreicht hat.

2. Einrichtung nach Anspruch 1, dadurch gekennzeichnet, daß der Greiferwagen (9) aus zwei voneinander weg und gegeneinander beweglichen Teilgreiferwagen (9a), (9b) besteht.

**Claims**

1. Equipment for forming a setting layer (6) of green bricks, having a conveyor track (1) which feeds green bricks in longitudinal rows (2) — that is to say green bricks, the largest outer surfaces of which are in close mutual contact — and by means of which the longitudinal rows (2) are conveyed into the region of a device for separating (4) the green bricks in close mutual contact, while maintaining predetermined distances, and having a standby track (5) arranged adjacent thereto, wherein

— the device for separating (4) the green bricks (3) in close mutual contact transversely to the conveying direction of the conveyor track (1) and in a longitudinal row (2) has a moving bridge (8) transversely spanning the conveyor track (1),
— the moving bridge (8) is designed to be movable up and down,
— a gripper carriage (9) is disposed on the moving bridge (8) for reciprocating movement transversely to the conveying direction of the conveyor track (1),
— individual grippers (13) are arranged undisplaceably side by side on the gripper carriage (9), which grippers grip the end faces of the green bricks (3) after the moving bridge (8) has been lowered, and
— the green bricks (3) are separated, after the moving bridge (8) has been lifted, by displacing the gripper carriage (9) in such a way that the individual grippers (13) allocated to the individual green bricks (3) successively release the particular green brick as soon as the latter has reached its predetermined distance.

2. Equipment according to claim 1, characterised in that the gripper carriage (9) consists of two part gripper carriages (9a), (9b) which are movable apart from and towards one another.

**Revendications**

1. Installation pour la formation d'une couche (6) de briques vertes, comportant une bande transporteuse (1) amenant les briques vertes en rangées longitudinales (2) — c'est-à-dire avec les briques vertes étroitement appliquées l'une contre l'autre par leurs grandes faces extérieures — installation au moyen de laquelle les rangées longitudinales (2) sont transportées dans la zone d'action d'un dispositif d'échelonnement (4) pour séparer individuellement les briques vertes étroitement appliquées l'une contre l'autre en observant des espacements prédéterminés, ainsi qu'une bande d'approvisionnement (5) placée à la suite, dans laquelle:

— le dispositif pour l'échelonnement (4) des briques vertes (3) placées étroitement l'une à côté de l'autre dans une rangée longitudinale (2) transversalement à la direction de transport de la bande transporteuse (1), comporte un pont mobile (8) formant pont transversalement au-dessus de la bande transporteuse (1),
— le pont mobile (8) est agencé de façon à pouvoir être déplacé vers le haut et vers le bas,
— sur le pont mobile (8) est disposé un chariot à pinces (9) déplaçable selon les deux directions transversalement à la direction de transport de la bande transporteuse (1),
— sur le cariot à pinces (9) sont disposées l'une à côté de l'autre sans possibilité de translation des pinces individuelles (13) qui saisissent les briques vertes (3) sur les faces frontales après descente du pont mobile (8), et
— les briques vertes (3) sont échelonnées, après relevage du pont mobile (8), par déplacement du chariot à pinces (9) de manière que les pinces individuelles (13) associées aux différentes briques vertes (3) soient ouvertes l'une après l'autre assitôt que la brique verte correspondante a atteint son espacement prédéterminé.

2. Installation selon la revendication 1, caractérisée en ce que le cariot à pinces (9) se compose de deux chariots partiels à pinces (9a, 9b) mobiles de façon à être rapprochés et écartés l'un de l'autre.

Fig.1

0 033 755

Fig. 2

Fig.3

Fig.4

Fig. 5